# EUROPEAN PATENT APPLICATION

(11) **EP 4 625 194 A1**
(43) Date of publication of application: **01.10.2025**
(21) Application number: 22966271.3
(22) Date of filing: 25.11.2022
(51) Int. Cl.: G06F 15/16

(54) **TRUST MEASUREMENT METHOD, DEVICE, AND SYSTEM**

(71) Applicant: Huawei Technologies Co., Ltd., Shenzhen, Guangdong 518129 (CN)
(72) Inventor: WANG, Donghui, Shenzhen, Guangdong 518129 (CN); LIU, Fei, Shenzhen, Guangdong 518129 (CN)
(74) Representative: Epping - Hermann - Fischer
(86) International application number: PCT/CN2022/134465
(87) International publication number: WO 2024/108583

(57) **Abstract**

Embodiments of this application provide a trustworthiness measurement method and apparatus, and a system. The method includes: A remote attestation service RAS network element obtains an attestation result of a first remote attestation agency RAA network element. The RAS network element receives a first request from a second RAA network element, where the first request is used to request the attestation result of the first RAA network element. The RAS network element sends the attestation result of the first RAA network element to the second RAA network element. In embodiments of this application, a trustworthiness measurement service can be provided to perform trustworthiness measurement, and resource consumption and complexity are low.

## Description

### TECHNICAL FIELD

This application relates to the field of network security technologies, and in particular, to a trustworthiness measurement method and apparatus, and a system.

### BACKGROUND

Trustworthiness measurement is to check metrics of hardware and software of a device to ensure that the device is not tampered with by an attacker. An endorser is configured to provide endorsement information, a reference value provider is configured to provide reference value information, an attester (attester) is configured to generate measurement information, and a verifier (verifier) verifies the measurement information based on the endorsement information and a reference value and generates an attestation result. Correspondingly, the verifier may send the attestation result to a relying party.

When the trustworthiness measurement technology is applied to a core network, for necessity of network virtualization security, a security issue for a core network element (network function, NF) is proposed. Because cloud-based deployment can be performed on an NF, security of an underlying physical device and a virtualization layer affects the security of the NF. In this case, security of underlying hardware and the virtualization layer of the NF needs to be measured. However, currently, trustworthiness measurement is performed only on an NF layer and a management plane, and there is no unified trustworthiness measurement service for various network elements, especially for a terminal device.

In addition, in this conventional trustworthiness measurement method, the verifier and the attester are in one-to-one correspondence, and trustworthiness measurement is performed each time in a one-to-one manner. For example, there are 10 attesters and 10 verifiers, and if mutual measurement is performed between the attesters and the verifiers, measurement needs to be performed 45 times. Therefore, complexity is high.

### SUMMARY

This application discloses a trustworthiness measurement method and apparatus, and a system, so that a trustworthiness measurement service can be provided to perform trustworthiness measurement, and complexity is low. According to a first aspect, an embodiment of this application provides a trustworthiness measurement method. The method includes: A remote attestation service RAS network element obtains an attestation result of a first remote attestation agency RAA network element. The RAS network element receives a first request from a second RAA network element, where the first request is used to request the attestation result of the first RAA network element. The RAS network element sends the attestation result of the first RAA network element to the second RAA network element.

In the foregoing method, the RAS network element obtains the attestation result of the first RAA network element, and correspondingly, after receiving the first request from the second RAA network element, sends the attestation result to the second RAA network element. The RAS network element may provide a trustworthiness measurement service to perform trustworthiness measurement, that is, the RAS network element may provide the attestation result in a centralized manner. In comparison with a conventional measurement manner in which an attester and a verifier have a one-to-one correspondence, the verifier sends a challenge value to the attester, the attester generates measurement information based on the challenge value, and sends the measurement information to the verifier, and the verifier verifies the measurement information and generates an attestation result and that causes high resource consumption and high complexity, in this application, the RAS network element provides the trustworthiness measurement service, and provides the attestation result in a centralized manner, so that the second RAA network element can obtain the attestation result of the first RAA network element from the RAS network element when needing to use the attestation result, without a need of initiating a measurement process again, reducing resource consumption, and having a simple implementation procedure.

In a possible implementation, that a RAS network element obtains an attestation result of a first RAA network element includes: The RAS network element generates the attestation result of the first RAA network element.

In another possible implementation, the method further includes: The RAS network element generates a first challenge value based on a preset periodicity or a first control message, where a validity period of the first challenge value is first duration. The RAS network element receives measurement information from the first RAA network element, where the measurement information is determined based on the first challenge value. The RAS network element verifies the measurement information.

In the foregoing method, in a manner in which the RAS network element generates the first challenge value based on the preset periodicity or the first control message, when the first RAA network element is a plurality of attesters, the RAS network element may send the first challenge value to the plurality of attesters, and the plurality of attesters may generate a plurality of pieces of corresponding measurement information based on the first challenge value. In comparison with a conventional measurement manner in which each of the plurality of attesters needs to generate a second challenge value, in this application, the RAS network element generates the first challenge value and sends the first challenge value to the plurality of attesters, so that resource consumption can be reduced.

In another possible implementation, the first control message is a request message sent by a management plane or sent by the first RAA network element.

In another possible implementation, the method further includes: If the verification succeeds, the RAS network element signs the measurement information, and generates the attestation result of the first RAA network element.

In the foregoing method, the RAS network element signs the measurement information, and generates the attestation result, so that the RAS network element can endorse a trustworthiness status of the first RAA network element, to help a node that uses the attestation result verify trustworthiness.

In another possible implementation, the method further includes: The RAS network element sends the attestation result to the first RAA network element.

In another possible implementation, that a RAS network element obtains an attestation result of a first RAA network element includes: The RAS network element receives the attestation result that is of the first RAA network element and that is sent by a third RAA network element.

In the foregoing method, the RAS network element receives the attestation result of the first RAA network element from the third RAA network element, and verifies the attestation result, so that robustness of the attestation result can be higher, and trustworthiness of the attestation result is enhanced.

In another possible implementation, that a RAS network element obtains an attestation result of a first RAA network element includes: The RAS network element receives the attestation result that is of the first RAA network element and that is sent by a public verification party PVE.

In the foregoing method, the RAS network element receives the attestation result from the PVE and verifies the attestation result, so that robustness of the attestation result can be higher, trustworthiness of the attestation result can be enhanced, and the PVE can endorse a trustworthiness status of a network node to help another node verify the trustworthiness.

In another possible implementation, the first request includes one or more of the following: a subscription permanent identifier SUPI, a public key PK, or an international mobile equipment identity IMEI.

In another possible implementation, the attestation result of the first RAA network element includes one or more of the following: measurement information (evidence), verification type information, verifier list (verifier list) information, a nonce (nonce), signature (signature) information, or freshness (freshness) attestation information. The freshness attestation information may mean that the attestation result of the first RAA is time-sensitive. In this manner, it can be avoided a case in which accuracy of the attestation result is affected because an expired attestation result is obtained.

In another possible implementation, the method further includes: The RAS network element obtains endorsement (endorsement) information and reference value (reference value) information from a first remote attestation infrastructure RAI network element, where the endorsement information and the reference value information are used to verify the measurement information or the attestation result.

In another possible implementation, the method further includes: The RAS network element receives registered remote attestation capability information from the first RAA network element.

In the foregoing method, in this manner, the RAS network element can have a trustworthiness capability of managing a network device.

In another possible implementation, the method further includes: The RAS network element sends the attestation result to a second RAI network element. The second RAI network element may be a network element having a storage function, for example, may be a storage system or a database. In this manner, if needing to use the attestation result of the first RAA network element, another network element in a network can obtain the attestation result from the second RAI network element, without a need of initiating a measurement process again, to reduce resource consumption.

According to a second aspect, an embodiment of this application provides a trustworthiness measurement method. The method includes: A first remote attestation agency RAA network element receives a first challenge value, where the first challenge value is generated based on a preset periodicity or a first control message, and a validity period of the first challenge value is first duration. The first RAA network element generates measurement information based on the first challenge value. The first RAA network element sends the measurement information to a remote attestation service RAS network element.

In the foregoing method, the first RAA network element may be at least one attester. When the first RAA network element is a plurality of attesters, the RAS network element may send the first challenge value to the plurality of attesters, and the plurality of attesters may generate a plurality of pieces of corresponding measurement information based on the first challenge value. In comparison with a conventional measurement manner in which each of the plurality of attesters needs to generate a second challenge value, in this application, the RAS network element generates the first challenge value and sends the first challenge value to the plurality of attesters, so that resource consumption can be reduced.

In a possible implementation, the first control message is a request message sent by a management plane or sent by the first RAA network element.

In another possible implementation, the method further includes: The first RAA network element receives the attestation result from the RAS.

According to a third aspect, an embodiment of this application provides a trustworthiness measurement method. The method includes: A second remote attestation agency RAA network element sends a first request to a remote attestation service RAS network element, where the first request is used to request an attestation result of the first RAA network element. The second RAA network element receives the attestation result of the first RAA network element from the RAS network element.

In the foregoing method, the second RAA network element sends the first request to the RAS network element, and correspondingly, the second RAA network element receives the attestation result of the first RAA network element from the RAS network element, so that the RAS network element can provide a trustworthiness measurement service to perform trustworthiness measurement. When needing to use the attestation result of the first RAA network element, the second RAA network element can obtain the attestation result from a network element that stores the attestation result, without a need of initiating a measurement process again, to reduce resource consumption.

In a possible implementation, the first request includes one or more of the following: a subscription permanent identifier SUPI, a public key PK, or an international mobile equipment identity IMEI.

In another possible implementation, the attestation result of the first RAA network element includes one or more of the following: measurement information (evidence), verification type information, verifier list (verifier list) information, a nonce (nonce), signature (signature) information, or freshness (freshness) attestation information. The freshness attestation information may mean that the attestation result of the first RAA is time-sensitive. In this manner, it can be avoided a case in which accuracy of the attestation result is affected because an expired attestation result is obtained.

According to a fourth aspect, an embodiment of this application provides a trustworthiness measurement method. The method includes: A third remote attestation agency RAA network element determines an attestation result of a first RAA network element. The third RAA network element sends the attestation result of the first RAA network element to a remote attestation service RAS network element.

In the foregoing method, in the foregoing manner, the RAS network element can provide a trustworthiness measurement service to perform trustworthiness measurement.

In a possible implementation, the method further includes: The third RAA network element generates a second challenge value. The third RAA network element receives measurement information from the first RAA network element, where the measurement information is determined based on the second challenge value. The third RAA network element verifies the measurement information.

According to a fifth aspect, an embodiment of this application provides a trustworthiness measurement method. The method includes: A public verification party PVE determines an attestation result of a first remote attestation agency RAA network element. The PVE sends the attestation result of the first RAA network element to a remote attestation service RAS network element.

In the foregoing method, in the foregoing manner, the RAS network element can provide a trustworthiness measurement service to perform trustworthiness measurement.

According to a sixth aspect, an embodiment of this application provides a trustworthiness measurement apparatus. The apparatus includes a processing unit and a communication unit, where the processing unit is configured to obtain an attestation result of a first remote attestation agency RAA network element. The communication unit is configured to receive a first request from a second RAA network element, where the first request is used to request the attestation result of the first RAA network element. The communication unit is configured to send the attestation result of the first RAA network element to the second RAA network element.

In a possible implementation, the processing unit is configured to generate the attestation result of the first RAA network element.

In another possible implementation, the processing unit is further configured to generate a first challenge value based on a preset periodicity or a first control message, where a validity period of the first challenge value is first duration. The communication unit is further configured to receive measurement information from the first RAA network element, where the measurement information is determined based on the first challenge value. The processing unit is further configured to verify the measurement information.

In another possible implementation, the first control message is a request message sent by a management plane or sent by the first RAA network element.

In another possible implementation, the processing unit is configured to: when the verification succeeds, sign the measurement information, and generate the attestation result of the first RAA network element.

In another possible implementation, the communication unit is further configured to send the attestation result to the first RAA network element.

In another possible implementation, the communication unit is further configured to receive the attestation result that is of the first RAA network element and that is sent by a third RAA network element.

In another possible implementation, the communication unit is further configured to receive the attestation result that is of the first RAA network element and that is sent by a public verification party PVE.

In another possible implementation, the first request includes one or more of the following: a subscription permanent identifier SUPI, a public key PK, or an international mobile equipment identity IMEI.

In another possible implementation, the attestation result of the first RAA network element includes one or more of the following: measurement information (evidence), verification type information, verifier list (verifier list) information, a nonce (nonce), signature (signature) information, or freshness (freshness) attestation information.

In another possible implementation, the processing unit is further configured to obtain endorsement (endorsement) information and reference value (reference value) information from a first remote attestation infrastructure RAI network element, where the endorsement information and the reference value information are used to verify the measurement information or the attestation result.

In another possible implementation, the communication unit is further configured to receive registered remote attestation capability information from the first RAA network element.

In another possible implementation, the communication unit is further configured to send the attestation result to a second RAI network element.

For technical effects brought by the sixth aspect or the possible implementations, refer to the descriptions of the technical effects of the second aspect or the corresponding implementations.

According to a seventh aspect, an embodiment of this application provides a trustworthiness measurement apparatus.

The apparatus includes a processing unit and a communication unit. The communication unit is configured to receive a first challenge value, where the first challenge value is generated based on a preset periodicity or a first control message, and a validity period of the first challenge value is first duration. The processing unit is configured to generate measurement information based on the first challenge value. The communication unit is configured to send the measurement information to a remote attestation service RAS network element.

In a possible implementation, the first control message is a request message sent by a management plane or sent by the first RAA network element.

In another possible implementation, the communication unit is further configured to receive an attestation result from the RAS.

For technical effects brought by the seventh aspect or the possible implementations, refer to the descriptions of the technical effects of the second aspect or the corresponding implementations.

According to an eighth aspect, an embodiment of this application provides a trustworthiness measurement apparatus. The apparatus includes a processing unit and a communication unit. The communication unit is configured to send a first request to a remote attestation service RAS network element, where the first request is used to request an attestation result of a first RAA network element. The communication unit is configured to receive the attestation result of the first RAA network element from the RAS network element.

In a possible implementation, the first request includes one or more of the following: a subscription permanent identifier SUPI, a public key PK, or an international mobile equipment identity IMEI.

In another possible implementation, the attestation result of the first RAA network element includes one or more of the following: measurement information (evidence), verification type information, verifier list (verifier list) information, a nonce (nonce), signature (signature) information, or freshness (freshness) attestation information.

For technical effects brought by the eighth aspect or the possible implementations, refer to the descriptions of the technical effects of the second aspect or the corresponding implementations.

According to a ninth aspect, an embodiment of this application provides a trustworthiness measurement apparatus. The apparatus includes a processing unit and a communication unit. The processing unit is configured to determine an attestation result of a first RAA network element. The communication unit is configured to send the attestation result of the first RAA network element to a remote attestation service RAS network element.

In a possible implementation, the processing unit is further configured to generate a second challenge value. The communication unit is further configured to receive measurement information from the first RAA network element, where the measurement information is determined based on the second challenge value. The processing unit is further configured to verify the measurement information.

For technical effects brought by the ninth aspect or the possible implementations, refer to the descriptions of the technical effects of the second aspect or the corresponding implementations.

According to a tenth aspect, an embodiment of this application provides a trustworthiness measurement apparatus. The apparatus includes a processing unit and a communication unit. The processing unit is configured to determine an attestation result of a first remote attestation agency RAA network element. The communication unit is configured to send the attestation result of the first RAA network element to a remote attestation service RAS network element. For technical effects brought by the tenth aspect or the possible implementations, refer to the descriptions of the technical effects of the second aspect or the corresponding implementations.

According to an eleventh aspect, an embodiment of this application provides a trustworthiness measurement apparatus.

The apparatus includes at least one processor and a communication interface, and the at least one processor is configured to invoke a computer program stored in at least one memory, to enable the apparatus to implement the method according to the first aspect or the possible implementations of the first aspect.

According to a twelfth aspect, an embodiment of this application provides a trustworthiness measurement apparatus. The apparatus includes at least one processor and a communication interface, and the at least one processor is configured to invoke a computer program stored in at least one memory, to enable the apparatus to implement the method according to the second aspect or the possible implementations of the second aspect.

According to a thirteenth aspect, an embodiment of this application provides a trustworthiness measurement apparatus. The apparatus includes at least one processor and a communication interface, and the at least one processor is configured to invoke a computer program stored in at least one memory, to enable the apparatus to implement the method in the third aspect or the possible implementations of the third aspect.

According to a fourteenth aspect, an embodiment of this application provides a trustworthiness measurement apparatus. The apparatus includes at least one processor and a communication interface, and the at least one processor is configured to invoke a computer program stored in at least one memory, to enable the apparatus to implement the method according to the fourth aspect or the possible implementations of the fourth aspect.

According to a fifteenth aspect, an embodiment of this application provides a trustworthiness measurement apparatus. The apparatus includes at least one processor and a communication interface, and the at least one processor is configured to invoke a computer program stored in at least one memory, to enable the apparatus to implement the method according to the fifth aspect or the possible implementations of the fifth aspect.

Optionally, in any one of the eleventh aspect to the fifteenth aspect, the processor may be integrated with the memory. According to a sixteenth aspect, an embodiment of this application provides a trustworthiness measurement system. The system includes the apparatus according to the eleventh aspect, the apparatus according to the twelfth aspect, and the apparatus according to the thirteenth aspect.

According to a seventeenth aspect, an embodiment of this application provides a trustworthiness measurement system. The system includes the apparatus according to the eleventh aspect, the apparatus according to the thirteenth aspect, and the apparatus according to the fourteenth aspect.

According to an eighteenth aspect, an embodiment of this application provides a trustworthiness measurement system. The system includes the apparatus according to the eleventh aspect and the apparatus according to the thirteenth aspect. According to a nineteenth aspect, an embodiment of this application provides a trustworthiness measurement system. The system includes the apparatus according to the eleventh aspect and the apparatus according to the fifteenth aspect. According to a twentieth aspect, an embodiment of this application provides a chip system. The chip system includes a logic circuit and an input/output interface, and the logic circuit is configured to invoke a computer program stored in at least one memory, to implement the method according to any one of the foregoing aspects.

According to a twenty-first aspect, an embodiment of this application provides a computer-readable storage medium. The computer-readable storage medium stores computer instructions, and when the computer instructions are run on a processor, the method according to any one of the foregoing aspects is implemented.

According to a twenty-second aspect, an embodiment of this application provides a computer program product. When the computer program code is run on a processor, the method according to any one of the foregoing aspects is implemented.

### BRIEF DESCRIPTION OF DRAWINGS

FIG. 1 is a diagram of a structure of a trustworthiness measurement communication system according to an embodiment of this application;
FIG. 2 is a diagram of trustworthiness measurement according to an embodiment of this application;
FIG. 3 is a diagram of an architecture of measuring an NF according to an embodiment of this application;
FIG. 4 is a schematic flowchart of measuring an NF by a PACF network element according to an embodiment of this application;
FIG. 5 is a schematic flowchart of a conventional trustworthiness measurement method according to an embodiment of this application;
FIG. 6 is a diagram of a trustworthiness measurement method according to an embodiment of this application;
FIG. 7 is a diagram of another trustworthiness measurement method according to an embodiment of this application;
FIG. 8 is a diagram of another trustworthiness measurement method according to an embodiment of this application;
FIG. 9 is a diagram of another trustworthiness measurement method according to an embodiment of this application;
FIG. 10 is a diagram of another trustworthiness measurement method according to an embodiment of this application;
FIG. 11 is a diagram of another trustworthiness measurement method according to an embodiment of this application;
FIG. 12 is a diagram of another trustworthiness measurement method according to an embodiment of this application;
FIG. 13 is a diagram of a trustworthiness measurement apparatus according to an embodiment of this application; and
FIG. 14 is a diagram of another trustworthiness measurement apparatus according to an embodiment of this application.

### DESCRIPTION OF EMBODIMENTS

The following describes embodiments of this application with reference to accompanying drawings in embodiments of this application.

Technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system, or a new radio access technology (new radio access technology, NR). The 5G mobile communication system may include non-standalone (non-standalone, NSA) networking and/or standalone (standalone, SA) networking.

The technical solutions provided in this application may be further applied to machine-type communication (machine-type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. A V2X communication system is a sidelink (sidelink, SL) transmission technology based on D2D communication.

The technical solutions provided in this application may be further applied to a future communication system, for example, a sixth-generation mobile communication system. This is not limited in this application.

It should be noted that a terminal device mentioned in this application includes a device that provides a voice and/or data connectivity for a user. Specifically, the terminal device includes the device that provides the voice for the user, the device that provides the data connectivity for the user, or the device that provides the voice and the data connectivity for the user. For example, the terminal device may include a hand-held device having a wireless connection function or a processing device connected to a wireless modem. The terminal device may communicate with a core network through a radio access network (radio access network, RAN), and exchange a voice or data with the RAN, or interact with the RAN for a voice and data. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a light terminal device (light UE), reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, a portable, pocket-sized, hand-held, or a computer built-in mobile apparatus, or the like. For example, the terminal device may be a device like a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device having low power consumption, a device having a limited storage capability, or a device having a limited computing capability. For example, the terminal device includes an information sensing device like a barcode, radio frequency identification (radio frequency identification, RFID), a sensor, a global positioning system (global positioning system, GPS), or a laser scanner.

By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood as that any device that can perform data communication with a base station may be considered as the terminal device.

In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, an example in which the apparatus configured to implement the function of the terminal is the terminal device is used for describing the technical solutions provided in embodiments of this application.

It should be noted that a network device mentioned in this application includes, for example, an access network (access network, AN) device, for example, a base station (for example, an access point), and may be a device that is in an access network and that communicates with a wireless terminal device through an air interface in one or more cells. Alternatively, for example, a network device is a road side unit (road side unit, RSU) in a vehicle-to-everything (vehicle-to-everything, V2X) technology. The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation (a 5th generation, 5G) mobile communication technology NR system (also briefly referred to as an NR system), or may include a central unit (central unit, CU) and a distributed unit (distributed unit, DU) in a cloud access network (cloud radio access network, Cloud RAN) system. This is not limited in embodiments of this application.

It should be noted that a core network device mentioned in this application includes, for example, an access and mobility management function (access and mobility management function, AMF), a user plane function (user plane function, UPF), or a session management function (session management function, SMF). This is not limited in embodiments of this application.

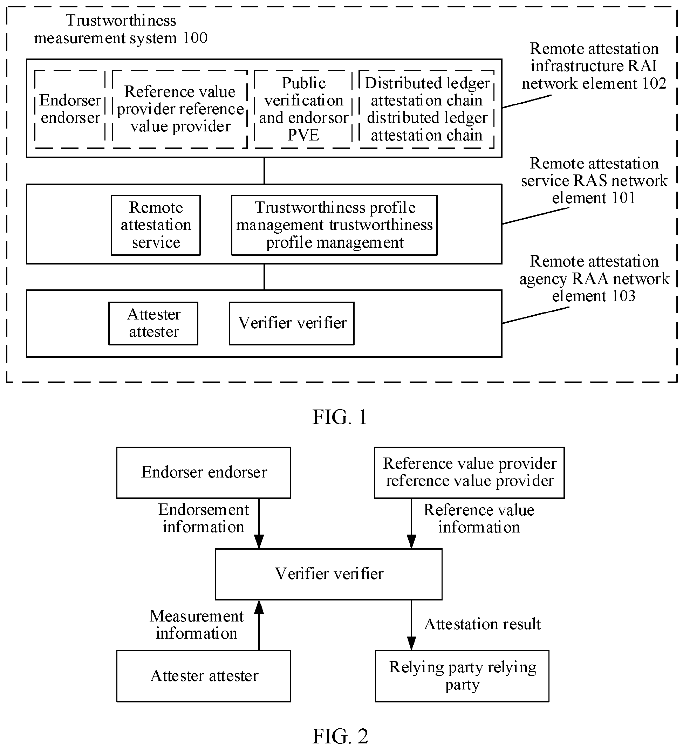

FIG. 1 is a diagram of a structure of a trustworthiness measurement system 100 according to an embodiment of this application. The trustworthiness measurement system 100 includes a remote attestation service (remote attestation service, RAS) network element 101, a remote attestation infrastructure (remote attestation infrastructure, RAI) network element 102, and a remote attestation agency (remote attestation agency, RAA) network element 103.

The RAS network element 101 provides a security service in a core network, and is used for trustworthiness measurement between nodes. The trustworthiness measurement may also be referred to as trustworthy attestation, remote attestation, or the like, and is to check metrics of hardware and software of a device to ensure that the device is not tampered with by an attacker. The RAS network element 101 may be an independent network function, network element, or hardware board, may be deployed with an existing network function network element in an overlay manner, or the like. This is not limited in this embodiment of this application.

The RAS network element 101 may provide a remote attestation service function, that is, a measurement service. For example, the RAS network element 101 may initiate a trustworthy challenge, to be specific, generate a first challenge value. The first challenge value may be a public challenge value, and may be generated by the RAS network element 101 based on a preset periodicity or a first control message, and a validity period of the first challenge value is first duration. The RAS network element 101 may further manage endorsement (endorsement) information and reference value (reference value) information. The RAS network element 101 may verify measurement information (evidence) and generate an attestation result. For example, the RAS network element 101 may receive measurement information from the RAA network element 103, verify the measurement information, endorse the measurement information, and generate an attestation result. Endorsing the measurement information may be understood as signing the measurement information by using a private key of the RAS network element 101. The RAS network element 101 may further verify an attestation result, for example, receive an attestation result from the RAA network element 103 and verify the attestation result. The RAS network element 101 may further receive an attestation result from a public verification party (public verification and endorsement, PVE), where the PVE is a third-party trustworthiness measurer.

The RAS network element 101 may further include a trustworthiness profile management (trustworthiness profile management) function, and is configured to receive registered remote attestation capability information from the RAA network element 103, which may alternatively be understood as receiving registered trustworthiness measurement profile information from the RAA network element 103.

The RAS network element 101 may include the following interfaces.

A storage-type interface may send the registered remote attestation capability information from the RAA network element 103 and the attestation result to a storage module. Optionally, the storage module may be in the RAI network element 102.

A basic information-related interface may receive the endorsement (endorsement) information and the reference value (reference value) information from the RAI network element 102.

An attestation result-related interface may receive the attestation result from the PVE, and may further receive the measurement information and the attestation result from the RAA network element 103.

A request response-type interface may receive and respond to a request of the RAA network element 103. For example, the RAA network element 103 sends a request message to the RAS network element 101, where the request message is used to request the attestation result. Correspondingly, the RAS network element 101 sends a response message to the RAA network element 103, where the response message includes the attestation result.

A broadcast-type interface may generate the first challenge value, and broadcast the first challenge value.

The RAI network element 102 is configured to provide information such as the endorsement information and a reference value. The RAI network element 102 may be an external entity, for example, may be an external entity held by an operator/a third party. In an example, the RAI network element 102 may be a vendor, for example, an endorser (endorser) and a reference value provider (reference value provider). The RAI network element 102 may alternatively be a PVE, that is, a third-party trustworthiness measurer. The RAI network element 102 may alternatively be a distributed ledger attestation chain (distributed ledger attestation chain), and has a secure storage function. The RAI network element 102 may alternatively be a management and orchestration (management and orchestration, MANO) entity, and is configured to manage an extended function for the trustworthiness measurement. It should be noted that the RAI network element 102 may alternatively be a network element in the core network, the RAI network element 102 belongs to a management plane, or functions of the RAI network element 102 and the RAS network element 101 are combined into one network element. This is not limited in this embodiment of this application.

The RAI network element 102 has the following function. The RAI network element 102 may provide endorsement (endorsement) information of remote trustworthy attestation, where the endorsement information is a hardware trustworthy platform, and is a basis of a root of trust. The RAI network element 102 may further provide reference value information of the remote trustworthy attestation, where the reference value information is a value used to verify whether the attestation result is trustworthy. The RAI network element 102 may further provide a PVE, where the PVE is a third-party trustworthiness measurer, and is a measurement function that is opened by the core network to the outside through the PVE. The PVE may receive an attestation result or measurement information from a trustworthy third party.

The RAI network element 102 may include the following interfaces.

A storage-type interface sends endorsement information, reference value information, and the like to a storage module. Correspondingly, the storage module may store the endorsement information, the reference value information, and the like. Optionally, the storage module may be in the RAI network element 102.

A registration-type interface provides endorsement information, reference value information, and the like for the RAS network element 101.

An attestation result-related interface sends an attestation result to the RAS network element 101.

The RAA network element 103 is a node that uses a trustworthiness measurement service in a network. The RAA network element 103 may be a communication entity like a terminal device, a network device, a core network device, a network function (network function, NF) of the core network, or a third-party function (application function, AF), that is in a communication network and that may have a trustworthiness measurement capability or a measurement information verification capability. This is not limited in this embodiment of this application. A bearing form may be a hardware security card, a security chip, an integrated-into SIM card, or a software module. This is not limited in this embodiment of this application.

When the RAA network element is the terminal device, the NF, or the core network device, the architecture shown in FIG. 1 is applicable to different scenarios. Details are as follows:
(1) When the RAA network element 103 is the terminal device, the architecture shown in FIG. 1 is applicable to the following scenarios.

Scenario 1: After verification, by the core network, of the trustworthiness measurement succeeds, the terminal device is allowed to access the network; and conventional identity authentication is extended to identity authentication and device authentication.

Scenario 2: The core network initiates a measurement request, for example, network handover, behavior anomaly, or periodic measurement, to the terminal device according to a policy.

Scenario 3: The terminal device sends an attestation result, for example, an access service or network handover, to the core network according to a policy.

(2) When the RAA network element 103 is the NF, the architecture shown in FIG. 1 is applicable to the following scenarios.

Scenario 1: When initiating a registration service to a network repository function (network repository function, NRF) network element, the NF performs trustworthiness measurement with the NRF.

Scenario 2: Trustworthiness measurement is performed during mutual access between NFs.

Scenario 3: For an action like starting or migration of the NF, the MANO entity or the management plane performs trustworthiness measurement on a device, an operating system, an image, and the like of the NF.

(3) When the RAA network element 103 is the core network device, the architecture shown in FIG. 1 is applicable to the following scenario.

Scenario 1: Trustworthiness measurement is performed on a network device according to a policy.

The RAA network element 103 has the following functions.

When serving as an attester (attester), the RAA network element 103 may receive a first challenge value or a second challenge value, and generate measurement information.

When serving as a verifier (verifier), the RAA network element 103 may verify measurement information from an attester (attester). After the verification succeeds, the RAA network element 103 may endorse the measurement information, and generate an attestation result.

The RAA network element 103 may include the following interfaces:
Registration-type interface: may register remote attestation capability information of the RAA network element 103 with the RAS network element 101.

Challenge value-related interface: may receive the first challenge value or the second challenge value. Measurement information or attestation result-related interface: may send the measurement information or the attestation result to the RAS network element 101.

Attestation result-related interface: may request the attestation result from the RAS network element 101.

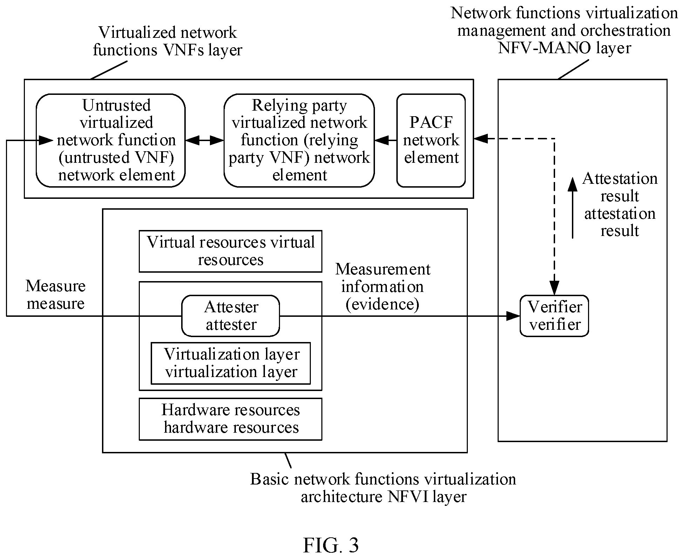

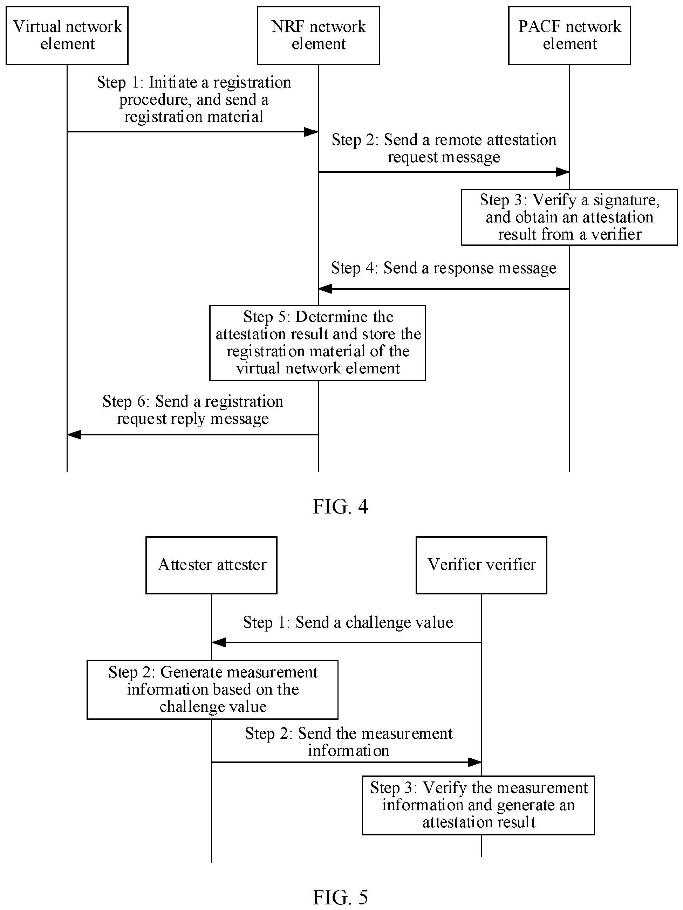

Trustworthiness measurement is to check metrics of hardware and software of a device to ensure that the device is not tampered with by an attacker. FIG. 2 is a diagram of trustworthiness measurement according to an embodiment of this application. An endorser is configured to provide endorsement information, a reference value provider is configured to provide reference value information, an attester is configured to generate measurement information, and a verifier verifies the measurement information based on the endorsement information and a reference value and generates an attestation result. Correspondingly, the verifier may send the attestation result to a reply party. When the trustworthiness measurement technology is applied to a core network, for necessity of network virtualization security, a security issue for a core network element (network function, NF) is proposed. Because cloud-based deployment can be performed on an NF, security of an underlying physical device and a virtualization layer affects the security of the NF. In this case, the security of underlying hardware and the virtualization layer of the NF needs to be measured. FIG. 3 is a diagram of an architecture of measuring an NF according to an embodiment of this application. The architecture includes an attester (attester), a verifier (verifier), a PACF network element, a relying party virtualized network function (relying party VNF) network element, and an untrusted virtualized network function (untrusted VNF) network element. The relying party VNF network element, the untrusted VNF network element, and the PACF network element are located at a virtualized network function (virtualized network functions, VNFs) layer. The attester (attester) is located at a basic network functions virtualization architecture (network functions virtualization infrastructure, NFVI) layer. The verifier (verifier) is located at a network functions virtualization management and orchestration (network functions virtualization management and orchestration, NFV-MANO) layer. Based on the diagram of the architecture in FIG. 3, FIG. 4 is a schematic flowchart of measuring an NF by a PACF network element according to an embodiment of this application.

Step 1: A virtual network element initiates a registration procedure to an NRF network element, and sends a registration material of the virtual network element.

Step 2: The NRF network element sends a remote attestation request message to the PACF network element.

The remote attestation request message includes the registration material of the virtual network element.

Step 3: The PACF network element verifies a signature, and obtains an attestation result from a verifier.

The attestation result may also be referred to as a remote verification result.

Step 4: The PACF network element sends a response message to the NRF network element.

The response message includes signature information and the attestation result.

Step 5: The NRF network element determines the attestation result and stores the registration material of the virtual network element.

Step 6: The NRF network element sends a registration request reply message to the virtual network element.

In FIG. 4, the PACF network element measures the NF in a conventional measurement method. FIG. 5 is a schematic flowchart of a conventional trustworthiness measurement method according to an embodiment of this application. Conventional trustworthiness measurement is single-point to single-point measurement. The single-point to single-point measurement may also be referred to as single-point measurement or direct measurement. In other words, a verifier (verifier) and an attester (attester) are in one-to-one relationship. A specific procedure is as follows:
Step 1: The verifier sends a challenge value to the attester.

The challenge value is a nonce.

Step 2: The attester generates measurement information based on the challenge value and sends the measurement information to the verifier.

Step 3: The verifier verifies the measurement information and generates an attestation result.

That the verifier verifies the measurement information is to determine trustworthiness of the attester.

In the single-point measurement, the verifier needs to have a capability of verifying the measurement information. In addition, the verifier needs to directly communicate with the attester. Because the verifier (verifier) and the attester (attester) are in one-to-one correspondence, trustworthiness measurement is performed each time in a one-to-one manner. For example, there are 10 attesters and 10 verifiers, and if mutual measurement is performed between the attesters and the verifiers, measurement needs to be performed 45 times. Therefore, computational complexity is high. In FIG. 4, a trustworthiness measurement technology is used to perform trustworthiness measurement on underlying facilities of the NF, to ensure security of the NF. However, currently, trustworthiness measurement is performed only on an NF layer and a management plane, and there is no unified trustworthiness measurement service for various network elements, especially for a terminal device. In this case, to resolve the foregoing problem, embodiments of this application provide the following solutions.

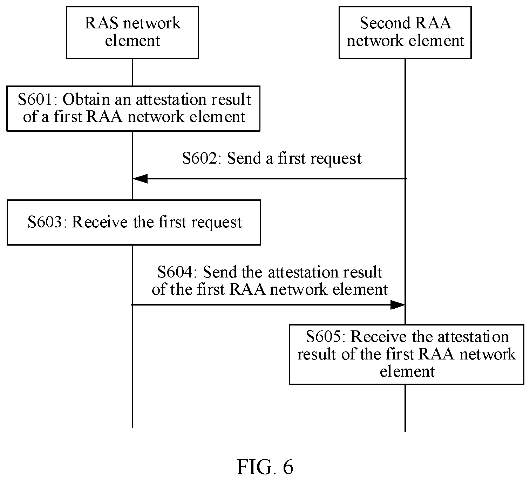

FIG. 6 shows a trustworthiness measurement method according to an embodiment of this application. The method includes but is not limited to the following steps.

Step S601: A RAS network element obtains an attestation result of a first RAA network element.

The RAS network element obtains the attestation result of the first RAA network element in the following three manners.

Manner A: The RAS network element generates the attestation result of the first RAA network element.

A process in which the RAS network element generates the attestation result of the first RAA network element is specifically as follows: The RAS network element generates a first challenge value based on a preset periodicity or a first control message, and sends the first challenge value to the first RAA network element. Correspondingly, the first RAA network element generates measurement information based on the first challenge value, and sends the measurement information to the RAS network element. The RAS network element verifies the measurement information. If the verification succeeds, the RAS network element signs the measurement information, and generates the attestation result of the first RAA network element.

The preset periodicity may be specified in a protocol or determined by the RAS network element. This is not limited in this embodiment of this application. The first control message is a request message sent by a management plane or sent by the first RAA network element, or may be a request message sent by any RAA network element other than the first RAA network element.

The first challenge value may also be referred to as a public challenge value or a public nonce. A validity period of the first challenge value is first duration. The first duration may be specified in a protocol or determined by the RAS network element. This is not limited in this embodiment of this application. For example, the preset periodicity may be at an interval of 10 seconds. For example, the first duration may be 30 seconds.

The first RAA network element may be one or more attesters (attesters). When the first RAA network element is a plurality of attesters, the RAS network element may send the first challenge value to the plurality of attesters, and the plurality of attesters may generate a plurality of pieces of corresponding measurement information based on the first challenge value. In comparison with a conventional measurement manner in which each of the plurality of attesters needs to generate a second challenge value, in this application, the RAS network element generates the first challenge value and sends the first challenge value to the plurality of attesters, so that resource consumption can be reduced.

The RAS network element may generate the first challenge value based on the preset periodicity or the first control message and according to a first preset rule. The first preset rule may be specified in a protocol or determined by the RAS network element. This is not limited in this embodiment of this application. For example, the preset periodicity is at the interval of 10 seconds, the first preset rule is a first nonce generation function, and the RAS network element may generate the first challenge value at the interval of 10 seconds according to the first nonce generation function. After generating the first challenge value, the RAS network element may broadcast the first challenge value, in other words, the first challenge value may be carried in a broadcast message. The broadcast message may be a radio resource control (radio resource control, RRC) RRC message, a media access control (media access control, MAC) control element (control element, CE) message, or a downlink control information (downlink control information, DCI). This is not limited in this embodiment of this application. Correspondingly, the first RAA network element may receive the broadcast message sent by the RAS network element, and the broadcast message carries the first challenge value. Certainly, the RAS network element may actively generate the first challenge value, which may alternatively be understood as that the RAS network element does not generate the first challenge value based on the preset periodicity or the first control message. This is not limited in this embodiment of this application.

The measurement information includes identity trustworthiness information and device trustworthiness information. The identity trustworthiness information is used to verify trustworthiness of an identity of the first RAA network element, and the device trustworthiness information is used to verify trustworthiness of a device of the first RAA network element. That the first RAA network element may generate the measurement information based on the first challenge value is specifically as follows: The first RAA network element may generate a measurement log based on measurement process information of a supported trusted computing platform, and then generate the measurement information through computation by using a digest of the measurement log and the first challenge value.

Optionally, before generating the first challenge value based on the preset periodicity or the first control message, the RAS network element may receive registered remote attestation capability information from the first RAA network element. In this manner, the RAS network element can have a trustworthiness capability of managing a network device.

Optionally, before generating the first challenge value based on the preset periodicity or the first control message, the RAS network element may receive endorsement information and reference value information from a first RAI network element.

The RAS network element may obtain the endorsement information and the reference value information from the first RAI network element, and verify the measurement information based on the endorsement information and the reference value information. The endorsement information is provided by an endorser, for example, a chip vendor, and the reference value information is provided by a reference value provider, for example, a device manufacturer. That the RAS network element signs the measurement information may mean that the RAS network element signs the measurement information by using signature information of the RAS network element, to generate the attestation result. Optionally, the signature information of the RAS network element may be a private key of the RAS network element. That is, the attestation result includes the measurement information and the signature information of the RAS network element.

For example, the first RAA network element is a terminal device, and the measurement information includes the identity trustworthiness information and the device trustworthiness information, to be specific, measurement information=certificate 1+hash 1, where the certificate 1 indicates the identity trustworthiness information, and the hash 1 indicates the device trustworthiness information. That the RAS network element verifies the measurement information based on the endorsement information and the reference value information is specifically as follows: First, the RAS network element verifies whether a chip in the terminal device is an authorized chip, and may obtain, from the chip vendor (for example, Intel), a certificate issued to the chip in the terminal device, for example, a certificate 2, where the certificate 2 is the endorsement information, and the chip vendor is the endorser. Then, the RAS network element compares the certificate 1 with the certificate 2, and if the certificate 1 and the certificate 2 are the same, determines that the chip in the terminal device is the authorized chip, in other words, the terminal device is an authorized user. Then, after determining that the terminal device is the authorized user, the RAS network element determines whether the hash 1 is real information, in other words, whether the hash 1 is trustworthy boot information. The RAS network element may obtain, from a device manufacturer of the terminal device, a hash value when the terminal device is a trustworthy boot, for example, a hash 2, where the hash 2 is the reference value information, and the device manufacturer is the reference value information provider. Then, the RAS network element compares the hash 1 with the hash 2, and if the hash 1 and the hash 2 are the same, determines that a device of the terminal device is trustworthy. The RAS network element determines, by performing trustworthiness measurement on an identity and the device of the terminal device, that the terminal device is trustworthy.

In a possible implementation, after obtaining the attestation result of the first RAA network element, the RAS network element may send the attestation result to the first RAA network element.

In another possible implementation, after obtaining the attestation result of the first RAA network element, the RAS network element may send the attestation result to a second RAI network element. Correspondingly, the second RAI network element may store the attestation result. The second RAI network element may be a network element having a storage function, for example, may be a storage system or a database. This is not limited in this embodiment of this application. In this manner, when needing to use the attestation result, a network element in a network can obtain the attestation result from the second RAI network element, without a need of initiating a measurement process again, to reduce resource consumption.

In Manner A, the first RAA network element may be one or more RAA network elements, for example, one or more attesters. For example, the first RAA network element is 10 attesters, and the 10 attesters may generate 10 pieces of corresponding measurement information. The RAS network element may separately verify the 10 pieces of measurement information, perform verification 10 times in total, and generate 10 corresponding attestation results. In comparison with a conventional trustworthiness measurement method in which 10 attesters need to establish relationships with 10 verifiers one by one and measurement is performed 45 times, this can greatly reduce complexity. Further, if needing to use the 10 attestation results, another network element in the network can obtain the attestation results from a network element that stores the attestation results, without a need of initiating 10 measurement processes, to reduce resource consumption.

Manner B: The RAS network element receives the attestation result that is of the first RAA network element and that is sent by a third RAA network element.

A process of determining the attestation result of the first RAA network element is specifically as follows: The third RAA network element generates a second challenge value, and sends the second challenge value to the first RAA network element. Correspondingly, the first RAA network element generates the measurement information based on the second challenge value, and sends the measurement information to the third RAA network element. After receiving the measurement information from the first RAA network element, the third RAA network element verifies the measurement information. If the verification succeeds, the third RAA network element signs the measurement information, and generates the attestation result of the first RAA network element. Correspondingly, the third RAA network element sends the attestation result of the first RAA network element to the RAS network element.

Optionally, the third RAA network element may be a verifier (verifier). The second challenge value may also be referred to as an independent challenge value or an independent nonce. The third RAA network element may generate the second challenge value according to a second preset rule. The second preset rule may be specified in a protocol or determined by the third RAA network element. This is not limited in this embodiment of this application. After generating the second challenge value, the third RAA network element may send the second challenge value to one or more first RAA network elements, and the first RAA network element may be an attester (attester).

Optionally, before the third RAA network element generates the second challenge value, the RAS network element may receive registered remote attestation capability information from the first RAA network element. In this manner, the RAS network element can have a trustworthiness capability of managing a network device.

Optionally, before the third RAA network element generates the second challenge value, the RAS network element may receive endorsement information and reference value information from a first RAI network element.

The measurement information includes identity trustworthiness information and device trustworthiness information. The identity trustworthiness information is used to verify trustworthiness of an identity of the first RAA network element, and the device trustworthiness information is used to verify trustworthiness of a device of the first RAA network element. That the first RAA network element generates the measurement information based on the second challenge value is specifically as follows: The first RAA network element may generate a measurement log based on measurement process information of a supported trusted computing platform and then generate the measurement information through computation by using a digest of the measurement log and the second challenge value.

Specifically, the third RAA network element may verify the measurement information based on the endorsement information and the reference value information. The endorsement information and the reference value information are sourced in the following two manners. In a first manner, the third RAA network element receives the endorsement (endorsement) information and the reference value (reference value) information from the RAS network element, in other words, the RAS network element obtains the endorsement information and the reference value information from the first RAI network element. Then, the RAS network element sends the endorsement information and the reference value information to the third RAA network element. Correspondingly, the third RAA network element receives the endorsement information and the reference value information from the RAS network element. In a second manner, the third RAA network element receives the endorsement information and the reference value information from the first RAI network element.

For a process in which the third RAA network element may verify the measurement information based on the endorsement information and the reference value information, refer to Manner A in which the RAS network element verifies the measurement information based on the endorsement information and the reference value information. Details are not described herein again.

The third RAA network element verifies the measurement information. If the verification succeeds, the third RAA network element signs the measurement information, and generates the attestation result of the first RAA network element. That the third RAA network element signs the measurement information may mean that the third RAA network element signs the measurement information by using signature information of the third RAAnetwork element, to generate the attestation result. Optionally, the signature information of the RAS network element may be a private key of the third RAA network element. That is, the attestation result includes the measurement information and the signature information of the third RAA network element.

In a possible implementation, after receiving the attestation result of the first RAA network element from the third RAA network element, the RAS network element verifies the attestation result of the first RAA network element. Specifically, the RAS network element may verify the attestation result based on the endorsement information and the reference value information. If the verification succeeds, the RAS network element may sign the attestation result by using the signature information of the RAS network element, that is, generate a new attestation result. The new attestation result includes the measurement information, the signature information of the third RAA network element, and the signature information of the RAS network element. The RAS network element signs the measurement information, and generates the attestation result, so that the RAS network element can endorse a trustworthiness status of the first RAA network element, to help a node that uses the attestation result verify trustworthiness. Optionally, the RAS network element may send the new attestation result to a second RAI network element. The second RAI network element may be a network element having a storage function, for example, may be a storage system or a database. This is not limited in this embodiment of this application. Correspondingly, if needing to use the attestation result of the first RAA network element, another network element in a network can obtain the attestation result from the second RAI network element, without a need of initiating a measurement process again, to reduce resource consumption. An attestation result that appears in the following steps S602 to S605 is the new attestation result, to be specific, the attestation result that is signed by the RAS network element.

In Manner B, the RAS network element receives the attestation result of the first RAA network element from the third RAA network element, and verifies the attestation result, so that robustness of the attestation result can be higher, and trustworthiness of the attestation result is enhanced. Further, if needing to use the attestation result of the first RAA network element, another network element in the network can obtain the attestation result from a network element that stores the attestation result, without a need of initiating the measurement process again, to reduce resource consumption.

Manner C: The RAS network element receives the attestation result that is of the first RAA network element and that is sent by a PVE.

A process of determining the attestation result of the first RAA network element is specifically as follows: The first RAA network element generates measurement information, and sends the measurement information to the PVE. Correspondingly, the PVE verifies the measurement information. If the verification succeeds, the PVE signs the measurement information, and generates the attestation result.

Generation of the measurement information may include the following three cases:
Case 1: The measurement information is determined based on a first challenge value of the RAS network element. After generating the first challenge value, the RAS network element sends the first challenge value to the first RAA network element. Correspondingly, the first RAA network element receives the first challenge value from the RAS network element, and determines the measurement information based on the first challenge value. The first challenge value is a public challenge value, the RAS network element generates the first challenge value based on a preset periodicity or a first control message, and a validity period of the first challenge value is first duration. For details, refer to the descriptions in step S601. Details are not described herein again.
Case 2: The measurement information is determined based on a second challenge value of a third RAA network element. After generating the second challenge value, the third RAA network element sends the second challenge value to the first RAA network element, where the third RAA network element may be a verifier (verifier). Correspondingly, the first RAA network element receives the second challenge value from the third RAA network element, and determines the measurement information based on the second challenge value. The second challenge value is an independent challenge value. For details, refer to the descriptions in step S701. Details are not described herein.
Case 3: The measurement information is determined based on a challenge value of the PVE. After generating the challenge value of the PVE, the PVE sends the challenge value of the PVE to the first RAA network element. Correspondingly, the first RAA network element receives the challenge value of the PVE from the PVE, and generates the measurement information based on the challenge value of the PVE. The challenge value of the PVE may be generated by the PVE according to a third preset rule. The third preset rule may be agreed on in a protocol or determined by the PVE. This is not limited in this embodiment of this application.

It should be noted that there may be a plurality of PVEs. The first RAA network element may send the measurement information of the first RAA network element to the plurality of PVEs. Correspondingly, the plurality of PVEs verify the measurement information. In this manner, trustworthiness can be enhanced. For a process in which the PVE may verify the measurement information based on endorsement information and reference value information, refer to step S607 in which the RAS network element verifies the measurement information based on the endorsement information and the reference value information. Details are not described herein again. The endorsement information and the reference value information are sourced in the following manners. In a first manner, the PVE receives the endorsement information and the reference value information from the RAS network element, in other words, the RAS network element obtains the endorsement information and the reference value information from the first RAI network element. Then, the RAS network element sends the endorsement information and the reference value information to the PVE. Correspondingly, the PVE receives the endorsement information and the reference value information from the RAS network element. In a second manner, the PVE receives the endorsement information and the reference value information from a first RAI network element.

Optionally, in Manner C, the PVE may be a hardware provider, an operating system provider, an application program provider, or a trustworthy certification authority (certification authority, CA). The first RAA network element may be a terminal device, a hardware platform, or an application program. This is not limited in this embodiment of this application.

In Manner C, the RAS network element receives the attestation result of the first RAA network element from the PVE, and verifies the attestation result, so that robustness of the attestation result can be higher, and trustworthiness of the attestation result is enhanced. Further, if needing to use the attestation result of the first RAA network element, another network element in a network can obtain the attestation result from a network element that stores the attestation result, without a need of initiating a measurement process again, to reduce resource consumption.

Step S602: A second RAA network element sends a first request to the RAS network element.

The first request is used to request the attestation result of the first RAA network element. Optionally, the first request may include but is not limited to one or more of the following: a subscription permanent identifier (subscription permanent identifier, SUPI), a public key (public key, PK), or an international mobile equipment identity (international mobile equipment identity, IMEI).

Step S603: The RAS network element receives the first request from the second RAA network element.

Step S604: The RAS network element sends the attestation result of the first RAA network element to the second RAA network element.

Optionally, the attestation result of the first RAA network element includes one or more of the following: measurement information (evidence), verification type information, verifier list (verifier list) information, a nonce (nonce), signature (signature) information, or freshness (freshness) attestation information. The verification type information may mean that the measurement information is generated based on the first challenge value or the second challenge value. The verifier list information may include a verifier list. For example, the verifier list includes a verifier 1, a verifier 2, and a verifier 3. The nonce may be the first challenge value or the second challenge value. When the measurement information is generated based on the first challenge value, the nonce is the first challenge value. When the measurement information is generated based on the second challenge value, the nonce is the second challenge value. The signature information may be the private key of the RAS network element. The freshness attestation information may be understood as that time calculated based on the attestation result of the first RAA is a time-sensitive result. In this manner, it can avoid a case in which accuracy of the attestation result is affected because an expired attestation result is obtained.

Step S605: The second RAA network element receives the attestation result of the first RAA network element from the RAS network element.

After the second RAA network element receives the attestation result of the first RAA network element, because the attestation result of the first RAA network element is authenticated by the RAS network element, if the second RAA network element considers that the RAS network element is trustworthy, the second RAA network element considers that the attestation result of the first RAA network element is trustworthy.

In the method shown in FIG. 6, the RAS network element obtains the attestation result of the first RAA network element, and correspondingly, after receiving the first request from the second RAA network element, sends the attestation result to the second RAA network element. The RAS network element may provide a trustworthiness measurement service to perform trustworthiness measurement, that is, the RAS network element may provide the attestation result in a centralized manner. In comparison with a conventional measurement manner in which the attester and the verifier conventionally have a one-to-one correspondence, the verifier sends a challenge value to the attester, the attester generates measurement information based on the challenge value, and sends the measurement information to the verifier, and the verifier verifies the measurement information and generates an attestation result and that causes high resource consumption and a complex procedure, in this application, the RAS network element provides the trustworthiness measurement service, and provides the attestation result in a centralized manner, so that the second RAA network element can obtain the attestation result of the first RAA network element from the RAS network element when needing to use the attestation result, without a need of initiating a measurement process, reducing resource consumption and having a simple implementation procedure.

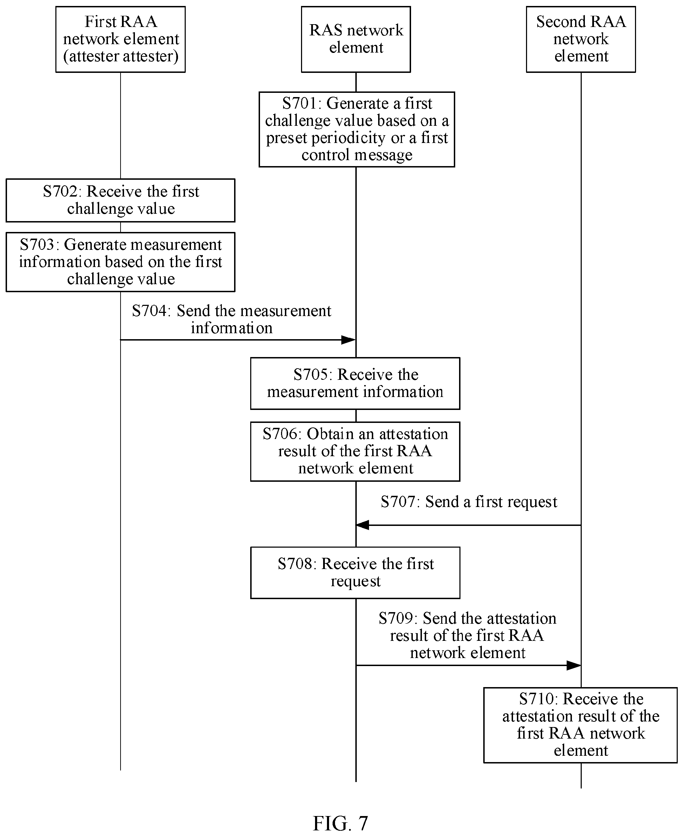

FIG. 7 shows a trustworthiness measurement method according to an embodiment of this application. In the method shown in FIG. 7, a first RAA network element and a second RAA network element each may be a terminal device, a base station, an edge server, a core network element, or an application function entity, and a RAS network element may be a core network element. The method includes but is not limited to the following steps.

Step S701: The RAS network element generates a first challenge value based on a preset periodicity or a first control message.

The preset periodicity may be specified in a protocol or determined by the RAS network element. This is not limited in this embodiment of this application. The first control message is a request message sent by a management plane or sent by the first RAA network element, or may be a request message sent by any RAA network element other than the first RAA network element. For example, the first RAA network element may be an attester (attester), and a third RAA network element may be a verifier (verifier).

A validity period of the first challenge value is first duration. For details, refer to the related descriptions of Manner A in step S601.

The RAS network element may generate the first challenge value based on the preset periodicity or the first control message and according to a first preset rule. For details, refer to the related descriptions of Manner A in step S601.

Certainly, the RAS network element may actively generate the first challenge value, which may alternatively be understood as that the RAS network element does not generate the first challenge value based on the preset periodicity or the first control message. This is not limited in this embodiment of this application.

Optionally, before generating the first challenge value based on the preset periodicity or the first control message, the RAS network element may receive registered remote attestation capability information from the first RAA network element.

Optionally, before generating the first challenge value based on the preset periodicity or the first control message, the RAS network element may receive endorsement information and reference value information from a first RAI network element.

Step S702: The first RAA network element receives the first challenge value.

Step S703: The first RAA network element generates measurement information based on the first challenge value.

Specifically, the measurement information includes identity trustworthiness information and device trustworthiness information. For details, refer to the related descriptions of Manner A in step S601.

Step S704: The first RAA network element sends the measurement information to the RAS network element.

Step S705: The RAS network element receives the measurement information from the first RAA network element.

Step S706: The RAS network element obtains an attestation result of the first RAA network element.

That the RAS network element obtains the attestation result of the first RAA network element may include: The RAS network element generates the attestation result of the first RAA network element. For details, refer to the related descriptions of Manner A in step S601.

In a possible implementation, after obtaining the attestation result of the first RAA network element, the RAS network element may send the attestation result to the first RAA network element.

In another possible implementation, after obtaining the attestation result of the first RAA network element, the RAS network element may send the attestation result to a second RAI network element. The second RAI network element may be a network element having a storage function, for example, may be a storage system or a database. This is not limited in this embodiment of this application.

Step S707: The second RAA network element sends a first request to the RAS network element.

The first request is used to request the attestation result of the first RAA network element.

Step S708: The RAS network element receives the first request from the second RAA network element.

Step S709: The RAS network element sends the attestation result of the first RAA network element to the second RAA network element.

Step S710: The second RAA network element receives the attestation result of the first RAA network element from the RAS network element.

For this step, refer to the descriptions in step S605. Details are not described herein again.

In the method shown in FIG. 7, the first RAA network element may be one or more attesters. For example, the first RAA network element is 10 attesters, and the 10 attesters may generate 10 pieces of corresponding measurement information. The RAS network element may separately verify the 10 pieces of measurement information, perform verification 10 times in total, and generate 10 corresponding attestation results. Further, if needing to use the 10 attestation results, another network element in a network, for example, the second RAA network element, can obtain the attestation results from the RAS network element, without a need of initiating 10 measurement processes, to reduce resource consumption.

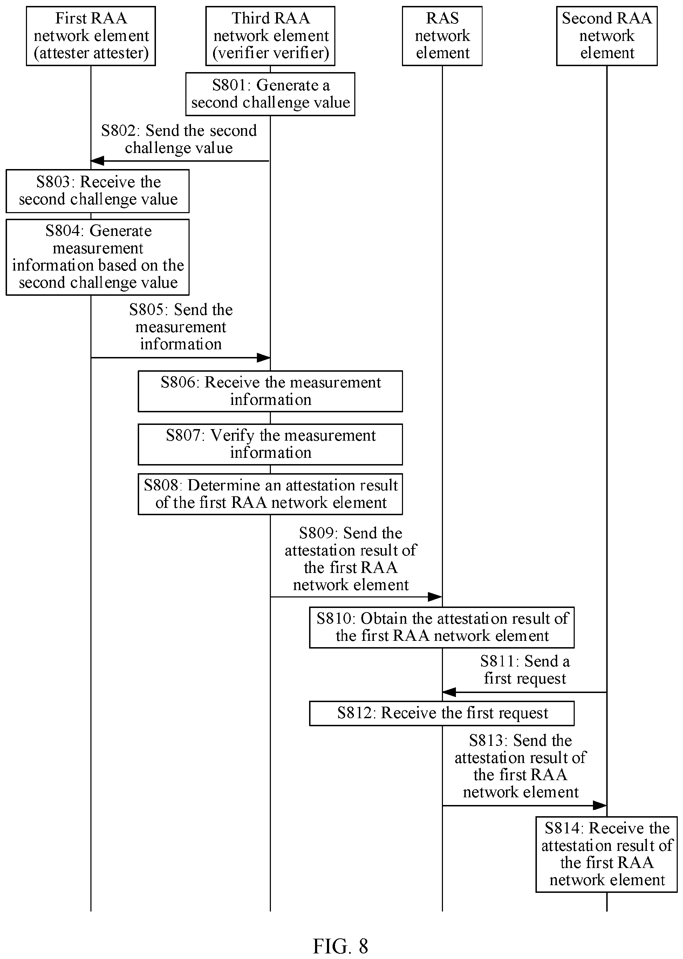

FIG. 8 shows a trustworthiness measurement method according to an embodiment of this application. In the method shown in FIG. 8, a first RAA network element, a second RAA network element, and a third RAA network element each may be a terminal device, a base station, an edge server, a core network element, or an application function entity, and a RAS network element may be a core network element. The method includes but is not limited to the following steps.

Step S801: The third RAA network element generates a second challenge value.

The third RAA network element may be a verifier (verifier). The second challenge value may also be referred to as an independent challenge value or an independent nonce. The third RAA network element may generate the second challenge value according to a second preset rule. The second preset rule may be specified in a protocol or determined by the third RAA network element. This is not limited in this embodiment of this application. After generating the second challenge value, the third RAA network element may send the second challenge value to one or more first RAA network elements, and the first RAA network element may be an attester (attester).

Optionally, before the third RAA network element generates the second challenge value, the RAS network element may receive registered remote attestation capability information from the first RAA network element.

Optionally, before the third RAA network element generates the second challenge value, the RAS network element may receive endorsement information and reference value information from a first RAI network element.

Step S802: The third RAA network element sends the second challenge value to the first RAA network element.

Step S803: The first RAA network element receives the second challenge value from the third RAA network element.

Step S804: The first RAA network element generates measurement information based on the second challenge value. The measurement information includes identity trustworthiness information and device trustworthiness information. For details, refer to the related descriptions of Manner B in step S601.

Step S805: The first RAA network element sends the measurement information to the third RAA network element.

Step S806: The third RAA network element receives the measurement information from the first RAA network element.

Step S807: The third RAA network element verifies the measurement information.

Specifically, the third RAA network element may verify the measurement information based on the endorsement information and the reference value information. The endorsement information and the reference value information are sourced in the following manners. In a first manner, the third RAA network element receives the endorsement (endorsement) information and the reference value (reference value) information from the RAS network element. In a second manner, the third RAA network element receives the endorsement information and the reference value information from the first RAI network element. For details, refer to the related descriptions of Manner B in step S601. For a process in which the third RAA network element may verify the measurement information based on the endorsement information and the reference value information, refer to Manner A in step S601 in which the RAS network element verifies the measurement information based on the endorsement information and the reference value information. Details are not described herein again.

Step S808: The third RAA network element determines an attestation result of the first RAA network element.

The third RAA network element verifies the measurement information. If the verification succeeds, the third RAA network element signs the measurement information, and generates the attestation result of the first RAA network element. For details, refer to the related descriptions of Manner B in step S601.

Step S809: The third RAA network element sends the attestation result of the first RAA network element to the RAS network element.

Step S810: The RAS network element obtains the attestation result of the first RAA network element.

Specifically, the RAS network element receives the attestation result of the first RAA network element from the third RAA network element. The attestation result includes the measurement information and signature information of the third RAA network element. Optionally, the signature information of the third RAA network element may be a private key of the third RAA network element.

In a possible implementation, after receiving the attestation result of the first RAA network element from the third RAA network element, the RAS network element verifies the attestation result of the first RAA network element. Specifically, the RAS network element may verify the attestation result based on the endorsement information and the reference value information. If the verification succeeds, the RAS network element may sign the attestation result by using signature information of the RAS network element, that is, generate a new attestation result. The new attestation result includes the measurement information, the signature information of the third RAA network element, and the signature information of the RAS network element. Optionally, the RAS network element may send the new attestation result to a second RAI network element. The second RAI network element may be a network element having a storage function, for example, may be a storage system or a database. This is not limited in this embodiment of this application. An attestation result that appears in the following steps S811 to S814 is the new attestation result, to be specific, an attestation result that is signed by the RAS network element.

Step S811: The second RAA network element sends a first request to the RAS network element.

The first request is used to request the attestation result of the first RAA network element.

Step S812: The RAS network element receives the first request from the second RAA network element.

Step S813: The RAS network element sends the attestation result of the first RAA network element to the second RAA network element.

Step S814: The second RAA network element receives the attestation result of the first RAA network element from the RAS network element.

For this step, refer to the descriptions in step S605. Details are not described herein again.

In the method shown in FIG. 8, the RAS network element receives the attestation result of the first RAA network element from the third RAA network element, and verifies the attestation result, so that robustness of the attestation result can be higher, and trustworthiness of the attestation result is enhanced. Further, if needing to use the attestation result of the first RAA network element, another network element in a network, for example, the second RAA network element, can obtain the attestation result from the RAS network element, without a need of initiating a measurement process again, to reduce resource consumption.

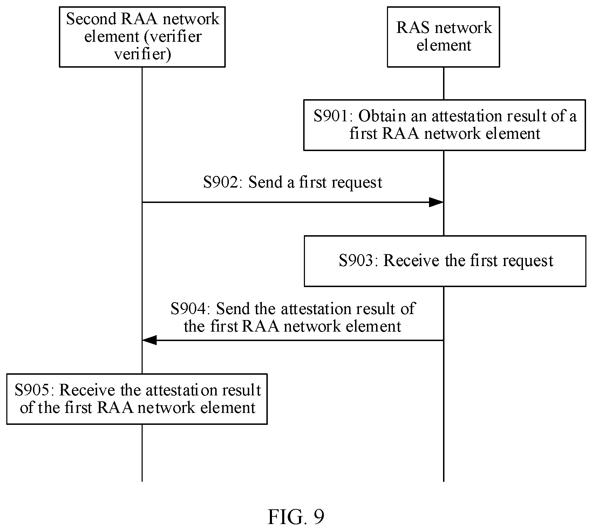

FIG. 9 shows a trustworthiness measurement method according to an embodiment of this application. The method shown in FIG. 9 is applicable to a scenario in which an authentication server function (authentication server function, AUSF) network element performs access authentication on a terminal device. A first RAA network element may be the terminal device, and a second RAA network element may be the AUSF network element. The method includes but is not limited to the following steps.

Step S901: A RAS network element obtains an attestation result of the first RAA network element.

The RAS network element obtains the attestation result of the first RAA network element in the following two manners. In a first manner, the RAS network element generates the attestation result of the first RAA network element. The RAS network element generates a first challenge value, and sends the first challenge value to the first RAA network element. The first RAA network element generates measurement information based on the first challenge value, and sends the measurement information to the RAS network element. Correspondingly, the RAS network element verifies the measurement information. If the verification succeeds, the RAS network element signs the measurement information, and generates the attestation result.

In a second manner, a third RAA network element sends the attestation result of the first RAA network element to the RAS network element. The third RAA network element is any one or more RAA network elements other than the first RAA network element and the second RAA network element. The third RAA network element may be a verifier (verifier). The third RAA network element generates a second challenge value, and sends the second challenge value to the first RAA network element. The first RAA network element generates measurement information based on the second challenge value, and sends the measurement information to the third RAA network element. Correspondingly, the third RAA network element verifies the measurement information. If the verification succeeds, the third RAA network element signs the measurement information, and generates the attestation result. Correspondingly, the third RAA network element may send the attestation result to the RAS network element.

Step S902: The second RAA network element sends a first request to the RAS network element.

The second RAA network element may be a verifier (verifier). The first request is used to request the attestation result of the first RAA network element. Optionally, the first request may include but is not limited to one or more of the following: a subscription permanent identifier SUPI, a public key PK, or an international mobile equipment identity IMEI.

Step S903: The RAS network element receives the first request from the second RAA network element.

Step S904: The RAS network element sends the attestation result of the first RAA network element to the second RAA network element.

The attestation result of the first RAA network element includes one or more of the following: the measurement information (evidence), verification type information, verifier list (verifier list) information, a nonce (nonce), signature (signature) information, or freshness (freshness) attestation information. For details, refer to the related descriptions in step S604. Details are not described herein again.

Step S905: The second RAA network element receives the attestation result of the first RAA network element from the RAS network element.

For details, refer to step S605. Details are not described herein.

In the method shown in FIG. 9, the RAS network element obtains the attestation result of the first RAA network element, and correspondingly, after receiving the first request from the second RAA network element, sends the attestation result to the second RAA network element. The RAS network element may provide a trustworthiness measurement service to perform trustworthiness measurement, that is, the RAS network element may provide the attestation result in a centralized manner. In comparison with a conventional measurement manner in which an attester and a verifier conventionally have a one-to-one correspondence, the verifier sends a challenge value to the attester, the attester generates measurement information based on the challenge value, and sends the measurement information to the verifier, and the verifier verifies the measurement information and generates an attestation result and that causes high resource consumption and a complex procedure, in this application, the RAS network element provides the trustworthiness measurement service, and provides the attestation result in a centralized manner, so that the second RAA network element can obtain the attestation result of the first RAA network element from the RAS network element when needing to use the attestation result, without a need of initiating a measurement process, reducing resource consumption and having a simple implementation procedure.

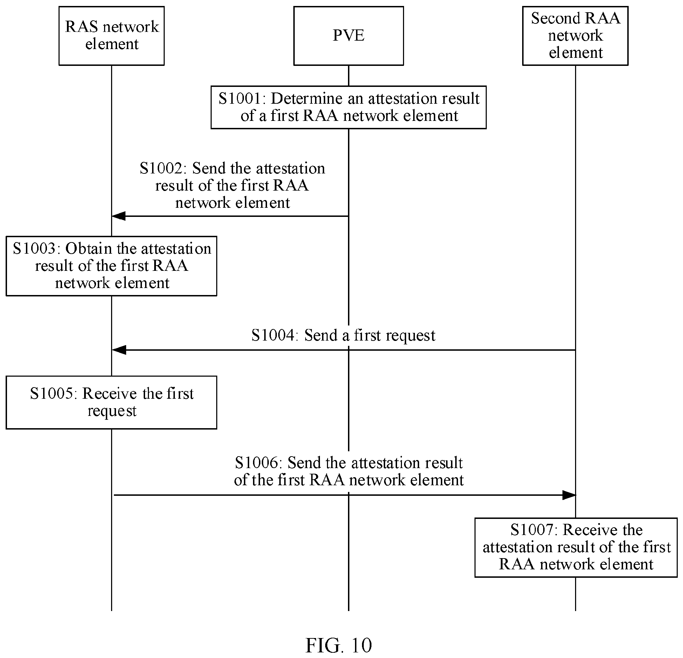

FIG. 10 shows a trustworthiness measurement method according to an embodiment of this application. In the method shown in FIG. 10, a PVE may be a hardware provider, an operating system provider, an application program provider, or a trustworthy certification authority (certification authority, CA), and a first RAA network element may be a terminal device, a hardware platform, or an application program. The method includes but is not limited to the following steps.

Step S1001: The PVE determines an attestation result of the first RAA network element.

Optionally, the PVE may be the hardware provider, the operating system provider, the application program provider, or the trustworthy certification authority (certification authority, CA). The first RAA network element may be the terminal device, the hardware platform, or the application program. This is not limited in this embodiment of this application.

Specifically, the PVE receives measurement information from the first RAA network element, and verifies the measurement information. If the verification succeeds, the PVE signs the measurement information, and generates the attestation result. Generation of the measurement information may include the following three cases: Case 1: The measurement information is determined based on a first challenge value of a RAS network element. Case 2: The measurement information is determined based on a second challenge value of a third RAA network element. Case 3: The measurement information is determined based on a challenge value of the PVE. For details, refer to the related descriptions of Manner C in step S601. Details are not described herein again.

It should be noted that there may be a plurality of PVEs. The first RAA network element may send the measurement information of the first RAA network element to the plurality of PVEs. Correspondingly, the plurality of PVEs verify the measurement information. For details, refer to the related descriptions of Manner C in step S601. Details are not described herein again.

Step S1002: The PVE sends the attestation result of the first RAA network element to the RAS network element.

Step S1003: The RAS network element obtains the attestation result of the first RAA network element.

That the RAS network element obtains the attestation result of the first RAA network element may include: The RAS network element receives the attestation result of the first RAA network element from the PVE.

Step S1004: A second RAA network element sends a first request to the RAS network element.

The first request is used to request the attestation result of the first RAA network element.

Step S1005: The RAS network element receives the first request from the second RAA network element.

Step S1006: The RAS network element sends the attestation result of the first RAA network element to the second RAA network element.

Step S1007: The second RAA network element receives the attestation result of the first RAA network element from the RAS network element.

For details, refer to step S605. Details are not described herein.

In the method shown in FIG. 10, the RAS network element receives the attestation result of the first RAA network element from the PVE, and verifies the attestation result, so that robustness of the attestation result can be higher, and trustworthiness of the attestation result is enhanced. Further, if needing to use the attestation result of the first RAA network element, another network element in a network, for example, the second RAA network element, can obtain the attestation result from the RAS network element, without a need of initiating a measurement process again, to reduce resource consumption.

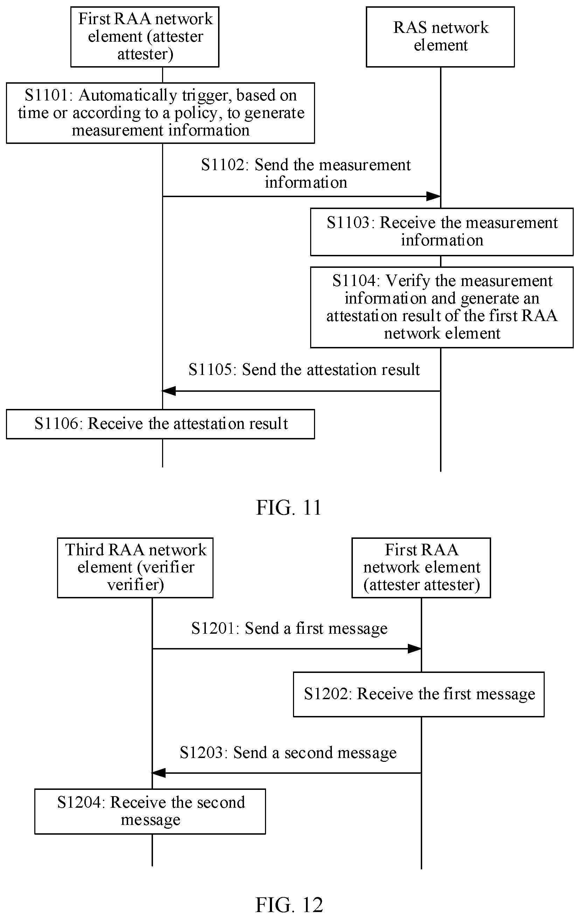

FIG. 11 shows a trustworthiness measurement method according to an embodiment of this application. In the method shown in FIG. 11, a first RAA network element may be a terminal device or a network device, for example, a base station or a core network element, and a RAS network element may be a core network element. The method includes but is not limited to the following steps.

Step S1101: The first RAA network element automatically triggers, based on time or according to a policy, to generate measurement information.

The first RAA network element is an attester (attester). That the first RAA network element automatically triggers, based on the time, to generate the measurement information may include: The first RAA network element automatically triggers, based on first duration, to generate the measurement information. For example, the first RAA network element automatically triggers, at an interval of T minutes, to generate the measurement information, where T is greater than 0. That the first RAA network element automatically triggers, according to the policy, to generate the measurement information may include: When the first RAA network element moves, that is, a network of the first RAA network element changes, for example, the network is handed over, it is automatically triggered to generate the measurement information.

Step S1102: The first RAA network element sends the measurement information to the RAS network element.

Step S1103: The RAS network element receives the measurement information from the first RAA network element.

Step S1104: The RAS network element verifies the measurement information and generates an attestation result of the first RAA network element.

Specifically, the RAS network element may verify the measurement information based on endorsement information and reference value information and generate the attestation result. For details, refer to the related descriptions in step S601. Details are not described herein again.

Step S1105: The RAS network element sends the attestation result to the first RAA network element.

Step S1106: The first RAA network element receives the attestation result from the RAS network element.

In the method shown in FIG. 11, in the foregoing manner, the RAS network element can provide a trustworthiness measurement service to perform trustworthiness measurement.

FIG. 12 shows a trustworthiness measurement method according to an embodiment of this application. In the method shown in FIG. 12, a first RAA network element is a terminal device, and correspondingly, a third RAA network element is an AUSF network element or a network device, for example, a base station. A first RAA network element is a network device, and correspondingly, a third RAA network element is a terminal device. A first RAA network element is a core network element, and correspondingly, a third RAA network element is a MAMO, a core network element, or an NRF network element. The method includes but is not limited to the following steps.

Step S1201: The third RAA network element sends a first message to the first RAA network element.

The first message is used to request an attestation result of the first RAA network element. The first RAA network element is an attester (attester), and the third RAA network element is a verifier (verifier).

Step S1202: The first RAA network element receives the first message from the third RAA network element.

Step S1203: The first RAA network element sends a second message to the third RAA network element.

The second message includes the attestation result.

Step S1204: The third RAA network element receives the second message from the first RAA network element and a RAS network element.

In the method shown in FIG. 12, in the foregoing manner, the RAS network element can provide a trustworthiness measurement service to perform trustworthiness measurement.

The foregoing describes in detail the methods in embodiments of this application. The following provides apparatuses in embodiments of this application.

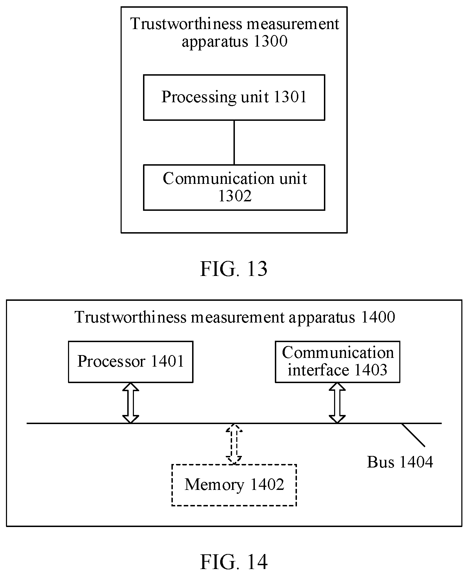

FIG. 13 is a diagram of a structure of a trustworthiness measurement apparatus 1300 according to an embodiment of this application. The trustworthiness measurement apparatus 1300 includes a processing unit 1301 and a communication unit 1302. Detailed descriptions of the units are as follows: The processing unit 1301 is configured to obtain an attestation result of a first remote attestation agency RAA network element. The communication unit 1302 is configured to receive a first request from a second RAA network element, where the first request is used to request the attestation result of the first RAA network element. The communication unit 1302 is configured to send the attestation result of the first RAA network element to the second RAA network element.

In a possible implementation, the processing unit 1301 is configured to generate the attestation result of the first RAA network element.

In another possible implementation, the processing unit 1301 is further configured to generate a first challenge value based on a preset periodicity or a first control message, where a validity period of the first challenge value is first duration. The communication unit 1302 is further configured to receive measurement information from the first RAA network element, where the measurement information is determined based on the first challenge value. The processing unit 1301 is further configured to verify the measurement information.

In another possible implementation, the first control message is a request message sent by a management plane or sent by the first RAA network element.

In another possible implementation, the processing unit 1301 is configured to: when the verification succeeds, sign the measurement information, and generate the attestation result of the first RAA network element.

In another possible implementation, the communication unit 1302 is further configured to send the attestation result to the first RAA network element.

In another possible implementation, the communication unit 1302 is further configured to receive the attestation result that is of the first RAA network element and that is sent by a third RAA network element.

In another possible implementation, the communication unit 1302 is further configured to receive the attestation result that is of the first RAA network element and that is sent by a public verification party PVE.

In another possible implementation, the first request includes one or more of the following: a subscription permanent identifier SUPI, a public key PK, or an international mobile equipment identity IMEI.

In another possible implementation, the attestation result of the first RAA network element includes one or more of the following: measurement information (evidence), verification type information, verifier list (verifier list) information, a nonce (nonce), signature (signature) information, or freshness (freshness) attestation information.

In another possible implementation, the processing unit 1301 is further configured to obtain endorsement (endorsement) information and reference value (reference value) information from a first remote attestation infrastructure RAI network element, where the endorsement information and the reference value information are used to verify the measurement information or the attestation result.

In another possible implementation, the communication unit 1302 is further configured to receive registered remote attestation capability information from the first RAA network element.

In another possible implementation, the communication unit 1302 is further configured to send the attestation result to a second RAI network element.

It should be noted that for implementation and beneficial effects of the units, also refer to the corresponding descriptions of the method embodiment shown in FIG. 6, FIG. 7, FIG. 8, FIG. 9, FIG. 10, FIG. 11, or FIG. 12.

Optionally, the detailed descriptions of the units in the trustworthiness measurement apparatus 1300 may be further as follows: The communication unit 1302 is configured to receive the first challenge value, where the first challenge value is generated based on the preset periodicity or the first control message, where the validity period of the first challenge value is the first duration. The processing unit 1301 is configured to generate the measurement information based on the first challenge value. The communication unit 1302 is configured to send the measurement information to a remote attestation service RAS network element.

In a possible implementation, the first control message is the request message sent by the management plane or sent by the first RAA network element.

In another possible implementation, the communication unit 1302 is further configured to receive the attestation result from the RAS.

It should be noted that for implementation and beneficial effects of the units, also refer to the corresponding descriptions of the method embodiment shown in FIG. 6 or FIG. 7.

Optionally, the detailed descriptions of the units in the trustworthiness measurement apparatus 1300 may be further as follows: The communication unit 1302 is configured to send the first request to the remote attestation service RAS network element, where the first request is used to request the attestation result of the first RAA network element. The communication unit 1302 is configured to receive the attestation result of the first RAA network element from the RAS network element.

In a possible implementation, the first request includes one or more of the following: the subscription permanent identifier SUPI, the public key PK, or the international mobile equipment identity IMEI.

In another possible implementation, the attestation result of the first RAA network element includes one or more of the following: the measurement information (evidence), the verification type information, the verifier list (verifier list) information, the nonce (nonce), the signature (signature) information, or the freshness (freshness) attestation information.

It should be noted that for implementation and beneficial effects of the units, also refer to the corresponding descriptions of the method embodiment shown in FIG. 6, FIG. 7, FIG. 8, FIG. 9, FIG. 10, FIG. 11, or FIG. 12.

Optionally, the detailed descriptions of the units in the trustworthiness measurement apparatus 1300 may be further as follows: The processing unit 1301 is configured to determine the attestation result of the first RAA network element. The communication unit 1302 is configured to send the attestation result of the first RAA network element to the remote attestation service RAS network element.

In a possible implementation, the processing unit 1301 is further configured to generate a second challenge value. The communication unit 1302 is further configured to receive the measurement information from the first RAA network element, where the measurement information is determined based on the second challenge value. The processing unit 1301 is further configured to verify the measurement information.

It should be noted that for implementation and beneficial effects of the units, also refer to the corresponding descriptions of the method embodiment shown in FIG. 6 or FIG. 8.

Optionally, the detailed descriptions of the units in the trustworthiness measurement apparatus 1300 may be further as follows: The processing unit 1301 is configured to determine the attestation result of the first remote attestation agency RAA network element. The communication unit 1302 is configured to send the attestation result of the first RAA network element to the remote attestation service RAS network element.

It should be noted that for implementation and beneficial effects of the units, also refer to the corresponding descriptions of the method embodiment shown in FIG. 6 or FIG. 10.

FIG. 14 shows a trustworthiness measurement apparatus 1400 according to an embodiment of this application. The trustworthiness measurement apparatus 1400 includes at least one processor 1401 and a communication interface 1403, and optionally, further includes a memory 1402. The processor 1401, the memory 1402, and the communication interface 1403 are connected to each other through a bus 1404. Optionally, the at least one processor 1401 and the memory 1402 may be integrated together.

The memory 1402 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1402 is configured for a related computer program and related data. The communication interface 1403 is configured to: receive and send data.

The processor 1401 may be one or more central processing units (central processing units, CPUs). When the processor 1401 is one CPU, the CPU may be a single-core CPU or a multi-core CPU.

The processor 1401 in the trustworthiness measurement apparatus 1400 is configured to: invoke the computer program stored in the memory 1402, and perform the following operations: obtaining an attestation result of a first remote attestation agency RAA network element; receiving a first request from a second RAA network element through the communication interface 1403, where the first request is used to request the attestation result of the first RAA network element; and sending the attestation result of the first RAA network element to the second RAA network element through the communication interface 1403.

In a possible implementation, the processor 1401 is configured to generate the attestation result of the first RAA network element.

In another possible implementation, the processor 1401 is further configured to generate a first challenge value based on a preset periodicity or a first control message, where a validity period of the first challenge value is first duration. The processor 1401 is further configured to receive measurement information from the first RAA network element through the communication interface 1403, where the measurement information is determined based on the first challenge value. The processor 1401 is further configured to verify the measurement information.

In another possible implementation, the first control message is a request message sent by a management plane or sent by the first RAA network element.

In another possible implementation, the processor 1401 is configured to: when the verification succeeds, sign the measurement information, and generate the attestation result of the first RAA network element.

In another possible implementation, the processor 1401 is further configured to send the attestation result to the first RAA network element through the communication interface 1403.

In another possible implementation, the processor 1401 is further configured to receive, through the communication interface 1403, the attestation result that is of the first RAA network element and that is sent by a third RAA network element.

In another possible implementation, the processor 1401 is further configured to receive, through the communication interface 1403, the attestation result that is of the first RAA network element and that is sent by a public verification party PVE.

In another possible implementation, the first request includes one or more of the following: a subscription permanent identifier SUPI, a public key PK, or an international mobile equipment identity IMEI.

In another possible implementation, the attestation result of the first RAA network element includes one or more of the following: measurement information (evidence), verification type information, verifier list (verifier list) information, a nonce (nonce), signature (signature) information, or freshness (freshness) attestation information.

In another possible implementation, the processor 1401 is further configured to obtain endorsement (endorsement) information and reference value (reference value) information from a first remote attestation infrastructure RAI network element, where the endorsement information and the reference value information are used to verify the measurement information or the attestation result.

In another possible implementation, the processor 1401 is further configured to receive registered remote attestation capability information from the first RAA network element through the communication interface 1403.

In another possible implementation, the processor 1401 is further configured to send the attestation result to a second RAI network element through the communication interface 1403.

It should be noted that for implementation and beneficial effects of the operations, also refer to the corresponding descriptions of the method embodiment in FIG. 6, FIG. 7, FIG. 8, FIG. 9, FIG. 10, FIG. 11, or FIG. 12.

The processor 1401 in the trustworthiness measurement apparatus 1400 is configured to: invoke the computer program stored in the memory 1402, and perform the following operations: receiving the first challenge value through the communication interface 1403, where the first challenge value is generated based on the preset periodicity or the first control message, where the validity period of the first challenge value is the first duration; generating the measurement information based on the first challenge value; and sending the measurement information to a remote attestation service RAS network element through the communication interface 1403.

In a possible implementation, the first control message is the request message sent by the management plane or sent by the first RAA network element.

In another possible implementation, the processor 1401 is further configured to receive the attestation result from the RAS through the communication interface 1403.

It should be noted that for implementation and beneficial effects of the operations, also refer to the corresponding descriptions of the method embodiment shown in FIG. 6 or FIG. 7.

The processor 1401 in the trustworthiness measurement apparatus 1400 is configured to: invoke the computer program stored in the memory 1402, and perform the following operations: sending the first request to the remote attestation service RAS network element through the communication interface 1403, where the first request is used to request the attestation result of the first RAA network element; and receiving the attestation result of the first RAA network element from the RAS network element through the communication interface 1403.

In a possible implementation, the first request includes one or more of the following: the subscription permanent identifier SUPI, the public key PK, or the international mobile equipment identity IMEI.

In another possible implementation, the attestation result of the first RAA network element includes one or more of the following: the measurement information (evidence), the verification type information, the verifier list (verifier list) information, the nonce (nonce), the signature (signature) information, or the freshness (freshness) attestation information.

It should be noted that for implementation and beneficial effects of the operations, also refer to the corresponding descriptions of the method embodiment shown in FIG. 6, FIG. 7, FIG. 8, FIG. 9, FIG. 10, FIG. 11, or FIG. 12.

The processor 1401 in the trustworthiness measurement apparatus 1400 is configured to: invoke the computer program stored in the memory 1402, and perform the following operations: determining the attestation result of the first RAA network element; and sending the attestation result of the first RAA network element to the remote attestation service RAS network element through the communication interface 1403.

In a possible implementation, the processor 1401 is further configured to generate a second challenge value. The processor 1401 is further configured to receive the measurement information from the first RAA network element through the communication interface 1403, where the measurement information is determined based on the second challenge value. The processor 1401 is further configured to verify the measurement information.

It should be noted that for implementation and beneficial effects of the operations, also refer to the corresponding descriptions of the method embodiment shown in FIG. 6 or FIG. 8.

The processor 1401 in the trustworthiness measurement apparatus 1400 is configured to: invoke the computer program stored in the memory 1402, and perform the following operations: determining the attestation result of the first remote attestation agency RAA network element; and sending the attestation result of the first RAA network element to the remote attestation service RAS network element through the communication interface 1403.

It should be noted that for implementation and beneficial effects of the operations, also refer to the corresponding descriptions of the method embodiment shown in FIG. 6 or FIG. 10.

It can be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may exist in the base station or the terminal as discrete components.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In descriptions of this application, the words such as "first", "second", "S601", or "S602" are merely used for distinguishing between descriptions and conveniently describing the context. Different sequences or numbers do not have specific technical meanings, and cannot be understood as indicating or implying relative importance, or indicating or implying an execution sequence of operations. Execution sequences of the processes should be determined based on functions and internal logic of the processes.

The term "and/or" in this application describes only an association relationship for associated objects, and indicates that three relationships may exist. For example, "A and/or B" may indicate the following three cases: Only A exists, both A and B exist; or only B exists, where A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns indicates "a singular noun or a plural noun", that is, "one or more". "At least one" indicates one or more. That "at least one of the following: A, B, and C is included" may indicate that A is included, B is included, C is included, A and B are included, A and C are included, B and C are included, or A, B, and C are included, where A, B, and C may be singular or plural.

## Claims

1. A trustworthiness measurement method, comprising:
obtaining, by a remote attestation service RAS network element, an attestation result of a first remote attestation agency RAA network element;
receiving, by the RAS network element, a first request from a second RAA network element, wherein the first request is used to request the attestation result of the first RAA network element; and
sending, by the RAS network element, the attestation result of the first RAA network element to the second RAA network element.

2. The method according to claim 1, wherein the obtaining, by a RAS network element, an attestation result of a first RAA network element comprises:
generating, by the RAS network element, the attestation result of the first RAA network element.

3. The method according to claim 2, wherein the method further comprises:
generating, by the RAS network element, a first challenge value based on a preset periodicity or a first control message, wherein a validity period of the first challenge value is first duration;
receiving, by the RAS network element, measurement information from the first RAA network element, wherein the measurement information is determined based on the first challenge value; and
verifying, by the RAS network element, the measurement information.

4. The method according to claim 3, wherein the first control message is a request message sent by a management plane or sent by the first RAA network element.

5. The method according to claim 3 or 4, wherein the method further comprises:
if the verification succeeds, signing, by the RAS network element, the measurement information, and generating the attestation result of the first RAA network element.

6. The method according to any one of claims 2 to 5, wherein the method further comprises:
sending, by the RAS network element, the attestation result to the first RAA network element.

7. The method according to claim 1, wherein the obtaining, by a RAS network element, an attestation result of a first RAA network element comprises:
receiving, by the RAS network element, the attestation result that is of the first RAA network element and that is sent by a third RAA network element.

8. The method according to claim 1, wherein the obtaining, by a RAS network element, an attestation result of a first RAA network element comprises:
receiving, by the RAS network element, the attestation result that is of the first RAA network element and that is sent by a public verification party PVE.

9. The method according to claim 1, wherein
the first request comprises one or more of the following: a subscription permanent identifier SUPI, a public key PK, or an international mobile equipment identity IMEI.

10. The method according to claim 9, wherein the attestation result of the first RAA network element comprises one or more of the following: measurement information (evidence), verification type information, verifier list (verifier list) information, a nonce (nonce), signature (signature) information, or freshness (freshness) attestation information.

11. The method according to any one of claims 1 to 10, wherein the method further comprises:
obtaining, by the RAS network element, endorsement (endorsement) information and reference value (reference value) information from a first remote attestation infrastructure RAI network element, wherein the endorsement information and the reference value information are used to verify the measurement information or the attestation result.

12. The method according to any one of claims 1 to 11, wherein the method further comprises:
receiving, by the RAS network element, registered remote attestation capability information from the first RAA network element.

13. The method according to any one of claims 1 to 12, wherein the method further comprises:
sending, by the RAS network element, the attestation result to a second RAI network element.

14. A trustworthiness measurement method, comprising:
receiving, by a first remote attestation agency RAA network element, a first challenge value, wherein the first challenge value is generated based on a preset periodicity or a first control message, and a validity period of the first challenge value is first duration;
generating, by the first RAA network element, measurement information based on the first challenge value; and
sending, by the first RAA network element, the measurement information to a remote attestation service RAS network element.

15. The method according to claim 14, wherein the first control message is a request message sent by a management plane or sent by the first RAA network element.

16. The method according to claim 14 or 15, wherein the method further comprises:
receiving, by the first RAA network element, the attestation result from the RAS.

17. A trustworthiness measurement apparatus, wherein the apparatus comprises a processing unit and a communication unit, wherein
the processing unit is configured to obtain an attestation result of a first remote attestation agency RAA network element;
the communication unit is configured to receive a first request from a second RAA network element, wherein the first request is used to request the attestation result of the first RAA network element; and
the communication unit is configured to send the attestation result of the first RAAnetwork element to the second RAA network element.

18. The apparatus according to claim 17, wherein
the processing unit is configured to generate the attestation result of the first RAA network element.

19. The apparatus according to claim 18, wherein
the processing unit is further configured to generate a first challenge value based on a preset periodicity or a first control message, wherein a validity period of the first challenge value is first duration;
the communication unit is further configured to receive measurement information from the first RAA network element, wherein the measurement information is determined based on the first challenge value; and
the processing unit is further configured to verify the measurement information.

20. The apparatus according to claim 19, wherein
the first control message is a request message sent by a management plane or sent by the first RAA network element.

21. The apparatus according to claim 19 or 20, wherein
the processing unit is configured to: when the verification succeeds, sign the measurement information, and generate the attestation result of the first RAA network element.

22. The apparatus according to any one of claims 18 to 21, wherein
the communication unit is further configured to send the attestation result to the first RAA network element.

23. The apparatus according to claim 17, wherein
the communication unit is further configured to receive the attestation result that is of the first RAA network element and that is sent by a third RAA network element.

24. The apparatus according to claim 17, wherein
the communication unit is further configured to receive the attestation result that is of the first RAA network element and that is sent by a public verification party PVE.

25. The apparatus according to claim 17, wherein
the first request comprises one or more of the following: a subscription permanent identifier SUPI, a public key PK, or an international mobile equipment identity IMEI.

26. The apparatus according to claim 25, wherein the attestation result of the first RAA network element comprises one or more of the following: measurement information (evidence), verification type information, verifier list (verifier list) information, a nonce (nonce), signature (signature) information, or freshness (freshness) attestation information.

27. The apparatus according to any one of claims 17 to 26, wherein
the processing unit is further configured to obtain endorsement (endorsement) information and reference value (reference value) information from a first remote attestation infrastructure RAI network element, wherein the endorsement information and the reference value information are used to verify the measurement information or the attestation result.

28. The apparatus according to any one of claims 17 to 27, wherein
the communication unit is further configured to receive registered remote attestation capability information from the first RAA network element.

29. The apparatus according to any one of claims 17 to 28, wherein
the communication unit is further configured to send the attestation result to a second RAI network element.

30. A trustworthiness measurement apparatus, wherein the apparatus comprises a processing unit and a communication unit, wherein
the communication unit is configured to receive a first challenge value, wherein the first challenge value is generated based on a preset periodicity or a first control message, and a validity period of the first challenge value is first duration,
the processing unit is configured to generate measurement information based on the first challenge value, and
the communication unit is configured to send the measurement information to a remote attestation service RAS network element.

31. The apparatus according to claim 30, wherein the first control message is a request message sent by a management plane or sent by the first RAA network element.

32. The apparatus according to claim 30 or 31, wherein
the communication unit is further configured to receive the attestation result from the RAS.

33. A trustworthiness measurement apparatus, wherein the apparatus comprises at least one processor and a communication interface, and the at least one processor is configured to invoke a computer program stored in at least one memory, to enable the apparatus to implement the method according to any one of claims 1 to 13.

34. A trustworthiness measurement apparatus, wherein the apparatus comprises at least one processor and a communication interface, and the at least one processor is configured to invoke a computer program stored in at least one memory, to enable the apparatus to implement the method according to any one of claims 14 to 16.

35. A trustworthiness measurement system, wherein the system comprises the apparatus according to claim 33 and the apparatus according to claim 34.

36. A chip system, wherein the chip system comprises a logic circuit and an input/output interface, and the logic circuit is configured to invoke a computer program stored in at least one memory, to implement the method according to any one of claims 1 to 16.

37. A computer-readable storage medium, wherein the computer-readable storage medium stores computer instructions, and when the computer instructions are run on a processor, the method according to any one of claims 1 to 16 is implemented.

38. A computer program product, wherein when the computer program product runs on a processor, the method according to any one of claims 1 to 16 is implemented.
